# EUROPEAN PATENT SPECIFICATION

(11) **EP 3 260 801 B1**
(45) Date of publication and mention of the grant of the patent: **06.02.2019**
(21) Application number: 17177734.5
(22) Date of filing: 23.06.2017
(51) Int. Cl.: F25J 1/00, F25J 1/02

(54) **SYSTEM AND METHOD FOR IMPROVING THE LIQUEFACTION RATE IN CRYOCOOLER-BASED CRYOGEN GAS LIQUEFIERS**
SYSTEM UND VERFAHREN ZUR VERBESSERUNG DER VERFLÜSSIGUNGSRATE IN VERFLÜSSIGERN VON KRYOGENEM GAS
SYSTÈME ET PROCÉDÉ PERMETTANT D'AMÉLIORER LE TAUX DE LIQUÉFACTION DANS DES LIQUÉFACTEURS À GAZ CRYOGÈNES BASÉS SUR DES CRYORÉFRIGÉRATEURS

(30) Priority: 24.06.2016 EP 16382300
(43) Date of publication of application: 27.12.2017
(73) Proprietor: Universidad De Zaragoza, 50009 Zaragoza (ES); Consejo Superior De Investigaciones Científicas (CSIC), 28006 Madrid (ES)
(72) Inventor: RILLO MILLÁN, Conrado, 28006 Madrid (ES); SESÉ MONCLÚS, Javier, 50009 Zaragoza (ES)
(74) Representative: Hoffmann Eitle

(56) References cited:
- US-A1- 2009 049 862
- US-A1- 2009 094 992
- US-A1- 2013 014 517
- US-A1- 2013 192 273

## Description

### FIELD OF THE INVENTION

The present invention relates generally to systems and methods for liquefaction of gases, and more particularly to such systems and methods adapted for obtaining improved liquefaction and performance efficiency. The main field of application of the invention is helium liquefaction technologies such as small-scale liquefiers of <100 liter/day liquefaction rates, based on closed-cycle cryocoolers.

### BACKGROUND OF THE INVENTION

Helium is a scarce element on earth and its numerous scientific and industrial applications continue to drive a growing demand. For example, common uses of gas-phase helium include welding, lifting (balloons), and semiconductor or fiber optic manufacturing. In the liquid phase, common uses include refrigeration of certain medical and scientific equipment, purging fuel tanks and basic research in solid-state physics, magnetism, and a wide variety of other research topics. Because of the widespread utility of helium and its limited availability, it is considered a high-cost non-renewable resource. Accordingly, there is an increasing interest in recycling helium and other similar noble gases.

In particular, liquid helium is used as the refrigerant in many applications in which it is necessary to reach temperatures below 20 K. Such applications are frequently related to the use of superconductors, and particularly in low-temperature physics research equipment, which operates in evacuated and insulated containers or vacuum flasks, called Dewars or cryostats. Such cryostats contain a mixture of both the gas and liquid phases and, upon evaporation, the gaseous phase is often released to the atmosphere. Therefore it is often necessary to purchase additional helium from an external source to continue the operation of the equipment in the cryostat.

One of liquid helium's most important applications is to refrigerate the high magnetic field superconducting coils used in magnetic resonance imaging (MRI) equipment, which provides an important diagnostic technique by non-invasively creating images of the internal body for diagnosing a wide variety of medical conditions in human beings.
The largest users of liquid helium are large international scientific facilities or installations, such as the Large Hadron Collider at the CERN international laboratory. Laboratories such as CERN recover, purify, and re-liquefy the recovered gas through their own large scale (Class L) industrial liquefaction plants, which typically produce more than 100 liters/h and require input power of more than 100 kW. For laboratories with more moderate consumption, medium (Class M) liquefaction plants are available that produce about 15 liters/hour. These large and medium liquefaction plants achieve a performance, R, of about 0.5-1 liter/hour/kW (12-24 liters/day/kW) when the gas is pre-cooled with liquid nitrogen, and about 0.25-0.5 liters/hour/kW (6-12 liters/day/kW) without pre-cooling.

For smaller scale applications, small-scale refrigerators are now commercially available which are capable of achieving sufficiently low temperatures to liquefy a variety of gases and, in particular, to liquefy helium at cryogenic temperatures below 4.2 K. In the industry, these small-scale refrigerators are normally referred to as closed-cycle cryocoolers. These cryocoolers have three components: a coldhead (a portion of which is called the "cold finger" and typically has one or two refrigeration stages), where the coldest end of the cold finger achieves very low temperatures by means of the cyclical compression and expansion of helium gas; a helium compressor which provides high pressure helium gas to and accepts lower pressure helium gas from the coldhead; and high and low pressure connecting hoses which connect the coldhead to the helium compressor. Each of the one or more cooling stages of the cold finger has a different diameter to accommodate variations in the properties of the helium fluid at various temperatures. Each stage of the cold finger comprises an internal regenerator and an internal expansion volume where the refrigeration occurs at the coldest end of each stage.

As a result of the development of these cryocoolers, various small-scale ("class S") liquefaction systems have become commercially available in the last years, such as for example the system disclosed in patent application WO 2011/139989 A2 or the system disclosed in patent US 8,671,698 B2. In these liquefiers, the gas to be liquefied cools by thermal exchange with either the cold stages of the cryocooler, or with heat exchangers attached to the cold stages of the cryocooler. In these small-scale liquefiers, a cryocooler coldhead operates in the neck of a double-walled container (a Dewar), which contains only the gas to be liquefied and is thermally insulated to minimize the flow of heat from the outside to the inside of the container. After the gas condenses, the resulting liquid is stored inside the inner tank of the Dewar.

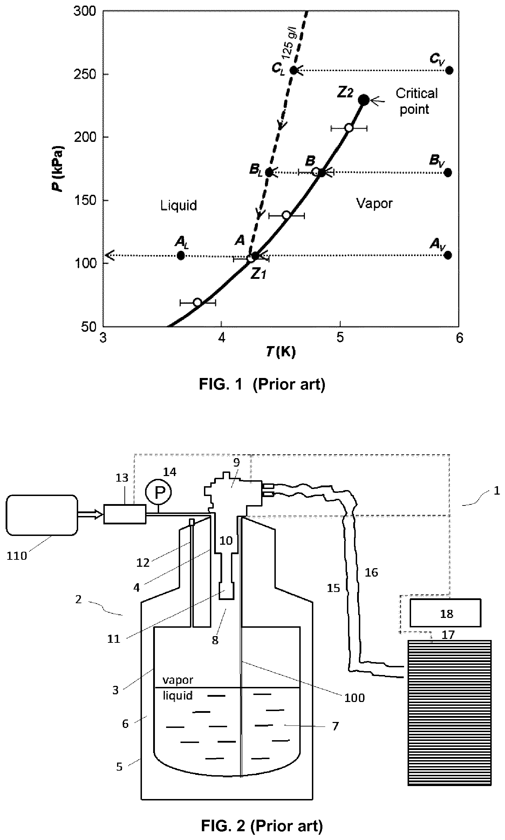

Figure 1 illustrates a general phase diagram of helium in which different liquefaction trajectories are indicated, based on prior art (see, for example, patent application WO 2011/139989 A2, or the article "Enhancement of the Liquefaction Rate in Small-Scale Helium Liquefiers Working Near and Above the Critical Point", published in Phys Rev. Applied 3, 051001 (2015)). Starting with commercial or recovered gas at room temperature (300 K) and pressures in the range 100 kPa - 250 kPa, the gas is cooled at constant pressure, thus passing through single phase He vapor points like *A_{V}, B_{V},* or *C_{V}* depending on the initial gas pressure. By further cooling this vapor following the indicated trajectories, the liquefier can produce two-phase liquid (point **Z**₁) at around 4.2 K and 1 bar (100 kPa), a liquid that is ready to be transferred to, for example, MRI equipment. If the liquefier gets full of liquid, and the liquid is not needed immediately, it is advantageous to produce single-phase supercooled liquid (e.g. point *A_{L}*) that can be transferred to equipment more efficiently than two-phase liquid. In reference to the liquefaction curves of Figure 1, *C_{V}C_{L}B_{L}AA_{L}* represents a possible trajectory of high performance. The optimal liquefaction pressure is typically around the critical pressure, **Z₂**, that is, 2.1 bar for the case of helium, a pressure for which liquefaction rates can reach and surpass 65 liters/day, equivalent to more than 30 liters/day at 4.2 K, with efficiencies approaching 4 liters/day/kW.

Ideally such small-scale liquefiers based on a cryocooler would achieve efficiencies comparable to that of the large and medium scale liquefiers. However, in practice, the achievable liquefaction performance (in terms of liters/day/kW) is significantly less for these small-scale liquefiers (< 4 liters/day/kW) than the performance obtained with the larger Class M and Class L liquefaction plants (> 6-12 liters/day/kW). The evolution in performance of prior art during the last 25 years is illustrated by Rillo et al. IEEE/CSC & ESAS European Superconductivity News Forum, No. 33, July 2015. Accordingly, there is a need of novel solutions allowing a further performance improvement of small-scale liquefiers. The present invention proposes a solution to said need. US20130192273 A1 discloses a gas liquefaction system with a dewar, a neck portion and a coldhead arranged in the neck portion.

### BRIEF DESCRIPTION OF THE INVENTION

Currently available small-scale liquefaction plants for producing less than 100 liters of liquefied cryogen per day, or "Class S" liquefiers, are substantially inefficient when compared to performances obtained by larger scale liquefaction plants. In addition, the medium and large-scale plants involve substantial complexity, require extensive maintenance and their liquefaction rates, > 15 liters/hour (i.e. > 360 liters/day)), are far in excess of the needs of many users.
In a first attempt to accomplish better efficiencies, the gas liquefaction system of the previous art described in patent application WO 2011/139989 A2 and in Phys Rev. Applied 3, 051001 (2015)) was adapted with means for controlling pressure within a liquefaction region of the system such that an elevated pressure provides operation at increased liquefaction temperature as described in the above references. By precisely controlling gas flowing into the system, an internal liquefaction pressure could be maintained at an elevated threshold. At the elevated pressure, around the critical pressure for optimum performance, the increased cooling power of the coldhead was utilized, and, unprecedented liquefaction rate values as large as 4 liters/day/kW, more than 100 % higher than previous art, were obtained (Rillo et al. IEEE/CSC & ESAS European Superconductivity News Forum, No. 33, July 2015, and Chialvo et al. Proceedings of the 18th International Cryocooler Conference, 2014, pp.551-556).

It is thus an object of the present invention to provide a gas liquefaction system according to claim 1 and method
according to claim 14 based on cryocoolers, adapted to utilize the thermodynamic properties of gaseous elements to extract increased cooling power from the cryocooler in order to improve the liquefaction rate and performance of the already known systems.

A liquefaction region is herein defined as a volume within the Dewar including a first cooling region adjacent to a first stage of a cryocooler where gas entering the system is initially cooled, and a second condensation region adjacent to a second or subsequent stage of the cryocooler where the cooled gas is further cooled and condensed into a liquid- phase. Thus, for purposes of this invention, the liquefaction region includes the neck portion of the Dewar and extends to the storage portion where liquefied cryogen is stored. In various embodiments of the invention, the system further comprises means for controlling pressure inside the Dewar, which can include a unitary pressure control module being adapted to regulate an input gas flow for entering the liquefaction region, such that pressure within the liquefaction region is precisely maintained during a liquefaction process. Alternatively, a series of pressure control components selected from solenoid valves, a mass flow meter, pressure regulators, and other pressure control devices may be individually disposed at several locations of the system such that a collective grouping of the individualized components is adapted to provide control of an input gas entering into the liquefaction region of the system.

Moreover, in order to further optimize the heat exchange between the gas and the various refrigeration elements of the liquefaction system, the proposed invention takes advantage of the already cooled gas circulating inside the coldhead of the cryocooler, by extracting small volumes of said gas from the coldest part of the coldhead, without altering its functioning. This already liquefied gas is added into the liquefaction region of the storage container, thereby increasing the average liquefaction rate of the system while temperature and pressure inside the storage container are kept constant by means of a control mechanism.

The system according to the present invention is adapted to maintain precise control over the vapor pressure inside the container, and thus is adapted to maintain precise control of the temperature and hence the power of the cryocooler where condensation is produced. Consequently, the system allows control of the operating point of the cryocooler, as determined by the temperatures of its one or more stages, and, thereby, of the amount of heat that can be extracted by the gas being liquefied, both for its pre-cooling from room temperature to the point of operation, and for its condensation and liquefaction.

In a preferred embodiment of the present invention, the storage container is insulated by a shell with the volume within the shell external of the storage portion being substantially evacuated of air.

In yet another preferred embodiment of the present invention, the storage container further comprises a transfer port extending from the liquid storage portion to an external surface of the storage container.

In yet another preferred embodiment of the present invention, the system further comprises a gas source module containing an amount of gas-phase cryogen for its introduction into liquefaction region of the storage container.

In yet another preferred embodiment of the present invention, the system further comprises a level meter for measuring the volume of liquid within the storage container.

In yet another preferred embodiment of the present invention, the pressure control mechanism comprises one or more of the following components:
- a pressure sensor for measuring the pressure values within the liquefaction region of the storage container;
- a pressure regulator for regulating pressure of gas entering the liquefaction region of the storage container;
- a mass flow meter;
- one or more valves for regulating input gas flow entering the liquefaction region.

In yet another preferred embodiment of the present invention, the pressure control mechanism is further connected to a computer for dynamically modulating input gas flow and/or pressure within the liquefaction region of the storage container.

In yet another preferred embodiment of the present invention, the extraction orifices have a diameter of 0.5-5.0 mm.

In yet another preferred embodiment of the present invention, the extraction orifices are performed over one or more refrigeration stages of the coldhead and attached thereto through fixing means comprised in the pass-through ports. More preferably, the pass-through ports comprise insulating seals to prevent undesired gas flow through said fixing means.

In yet another preferred embodiment of the present invention, one or more pass-through ports comprise a configurable cryogenic flow valve. Preferably, the closed/open configuration of said cryogenic valve is operated by traction means and/or compression means and, more preferably, the pass-through port and the cryogenic valve can optionally be connected through a capillary tube.

In different embodiments of the invention, the distributed gas inside the refrigeration compressor can be either of the same type or of a different type of the gas to be liquefied.

In yet another preferred embodiment of the present invention, the cryogen gas is any of: helium, nitrogen, oxygen, hydrogen, neon. More preferably, the gas contained in the gas intake module and, the gas contained in the gas injection source are both high purity helium gas, recovered from helium-using equipment and purified.

In a preferred embodiment of the present invention, the proposed gas liquefaction method further comprises the step of injecting gas into the liquefaction region of the storage container with a gas source, in collaboration with the pressure controller of the storage container, for maintaining the vapor pressure during step (iii).

In sum, the gas liquefaction system and method proposed by the present invention achieve much higher efficiencies than existing cryocooler-based liquefiers by providing improved heat exchanging means between the gas and the various refrigeration elements of the liquefaction system, extracting small volumes of said gas from the coldhead and injecting them in the liquefaction region of the storage container. The liquefaction efficiency of the system is further enhanced and stabilized by precisely controlling the pressure of the room temperature gas entering the liquefaction region, and thereby precisely controlling the pressure of the condensing gas in the liquefaction region of the system.

### DESCRIPTION OF THE DRAWINGS

The characteristics and advantages of this invention will be more apparent from the following detailed description, when read in conjunction with the accompanying drawings, in which:
Figure 1 shows a phase diagram of helium and prior art liquefaction P-T trajectories, according to prior art technologies.
Figure 2 shows a schematic diagram of a known prior art helium liquefaction system.
Figures 3a and 3b show schematic diagrams of two preferred embodiments of the liquefaction system according to the invention.
Figure 4 shows the schematic diagram of an example of the cryogenic elements to implement gas extraction from the coldhead, applied to a liquefaction system according to the diagram of Figures 3a-3b, represented in open (Fig. 4a) and closed (Fig. 4b) positions.
Figure 5 shows a liquefaction test carried out with a system according to the preferred embodiment of Figures 3-4, for the case of a 160-liter storage container, and compared with prior art.

### DETAILED DESCRIPTION OF THE INVENTION

In the following description, for purposes of explanation and not limitation, details are set forth in order to provide a thorough understanding of the present invention. However, it will be apparent to those skilled in the art that the present invention may be practiced in other embodiments that depart from these details and descriptions without departing from the scope of the invention. Certain embodiments will be described below with reference to the drawings wherein illustrative features are denoted by reference numerals.

In a general embodiment according to Figure 2, a known liquefaction system (1), also referred to herein as a cryostat, includes an isolated storage container (2) or Dewar comprising a liquid storage portion (3) and a neck portion (4) extending therefrom, and connected to an outer vessel (5) which is at ambient temperature. The storage container (2) is insulated by a shell (6) with the volume within the shell (6) external of the storage portion (3) being substantially evacuated of air. Also, in order to measure the volume of liquid within the storage container (2), the system can optionally include a level meter (100).

The storage portion (3) is adapted to contain a liquefied gas bath (7) at the bottom of the storage container (2) and a liquefaction region (8) above said bath (7), wherein the gas to be liquefied exchanges heat with the liquefaction system (1). In order to do so, the neck portion (4) is adapted to at least partially receive a cryocooler coldhead (9). The coldhead (9) may comprise one or more refrigeration stages (10, 11), each preferably having a distinct cross section. The neck portion (4) of the storage container (2) may be optionally adapted to geometrically conform to the one or more refrigeration stages (10, 11) of the cryocooler coldhead (9) in a stepwise manner. The storage container (2) further comprises a transfer port (12) extending from the liquid storage portion (3) to an external surface of the storage container (2). A forward pressure control mechanism (13) that integrates a mass flow meter and a proportional valve (FPC) is further provided for controlling gas flow and thereby pressure within the liquefaction region (8) of the storage container (2). The forward pressure control mechanism (13) generally includes a pressure regulator or other means for regulating pressure of gas entering the liquefaction region (8) of the storage container (2). The pressure control mechanism (13) also makes use of an external pressure sensor (14), or integrates it, for detecting pressure within the liquefaction region (8) of the storage container (2). In this regard, the control mechanism (13) is further connected to a computer Programmable Logic Controller (PLC) (18) (or equivalently, any suitable computing or processing means) for dynamically modulating input gas flow, and hence, pressure within the liquefaction region (8) of the storage container (2) for yielding optimum efficiency.

It should be recognized that although depicted as a distinct unit in several descriptive embodiments herein, the components of the pressure control mechanism (13) can be individually located near other system components and adapted to effectuate a similar liquefaction process. Accordingly, the pressure control mechanism (13) is intended to include a collection of components in direct attachment or otherwise collectively provided within the system (1) for dynamically controlling input gas flow, and thus pressure within the liquefaction region (8) of the storage container (2).

As referred in preceding sections, in the known liquefaction systems according to Figure 2 the coldhead (9) comprising one or more stages (10, 11) operates in the neck portion (4) of the storage container (2) or Dewar. A first stage (10) is the warmest and operates in the neck portion (4) further from the liquefaction region (8) than the other stages (11). Thus, the gas enters at the warm end of the neck portion (4) and is pre-cooled by the walls of the first stage (10) of the coldhead (9), by the coldest end of the first stage (10), further pre-cooled by the walls of the colder stages (11), and is then condensed at the coldest end of the coldest stage (11) of the coldhead (9). For a one-stage coldhead (9) embodiment, the condensation occurs at the coldest end of the first stage (10). Once condensed, the liquefied gas falls by gravity from the liquefaction region (8) down to the bath (7) at the bottom of the storage portion (3) in the interior of the storage container (2). The cooling power that each stage (10, 11) of a closed-cycle cryocooler generates, is determined mainly by its temperature, but also depends to second order on the temperature of the previous stages (10, 11). This information is generally supplied by the cryocooler manufacturer as a two-dimensional load map that plots the dependence of the power of the first (10) and second (11) stages versus the temperatures of the first and second stages (10, 11).

In addition to generating cooling power at the first (10) and second (11) stages, the coldhead (9) also generates cooling power along its entire length, in particular along the surface of the cylindrical cold finger between room temperature and the coldest end of the first stage (10), and along the length of the cylindrical cold finger between the stages (10, 11).

The liquefaction system (1) according to Figure 2 also comprises a refrigeration compressor (17) for distributing cold compressed gas inside the coldhead (9), wherein said gas is supplied to and returned from the coldhead (9) via compressor hoses (15, 16) for supply pressure (15) and for return pressure (16), and acts as refrigeration means for lowering the temperature of the refrigeration stages (10, 11). In known small-scale helium liquefiers, the supply pressures are typically between 1.5-2.5 MPa and the return pressures are typically between 0.3-1 MPa. The distributed gas inside the compressor (17) will preferably be of the same type of the gas to be liquefied (for example, helium).

The system (1) of Figure 2 is supplied primarily with gas from a gas source module (110), preferably being recovered gas from liquid a cryogen-using equipment. The gas source module (110) is connected to the storage container (2) and controlled by the pressure control mechanism (13). The condensation process of the cold vapor accumulating as liquid in the storage container (2) corresponds to an isobaric process during which any disturbance in pressure yields a diminished liquefaction rate. For the gas liquefaction system (1) to perform at optimum efficiency, it is therefore necessary to perform precise control of the interior pressure conditions, maintaining it throughout the entire process.

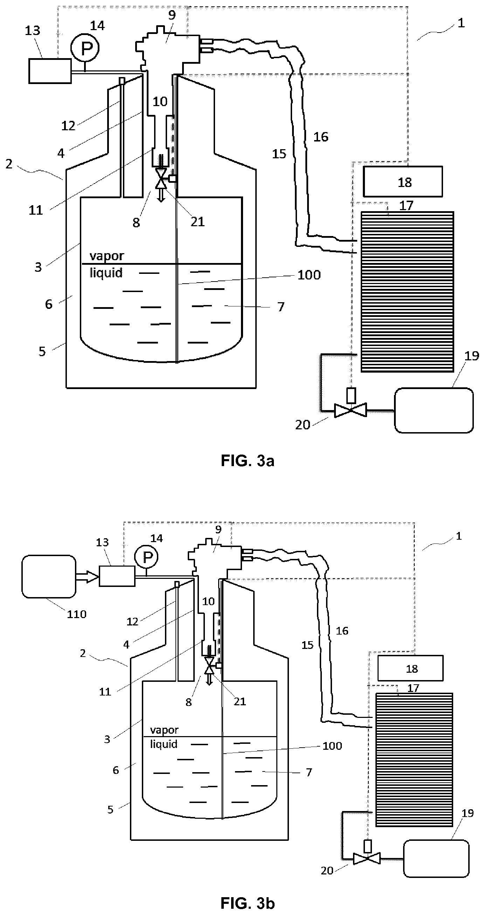

With the aim of improving the known liquefaction systems (1) in the art (Figure 2), it is an object of this invention to optimize the heat exchange between the gas and the various refrigeration elements of the liquefaction system (1), as well as obtaining further auxiliary means for improving the liquefaction rate obtained through the cryocooler coldhead (9). In order to carry out the said object, Figure 3a and Figure 3b illustrate liquefaction systems (1) according to two preferred embodiments of the present invention. As described in precedent sections, the proposed liquefaction system (1) of the invention takes advantage of the already cooled gas circulating inside the cryocooler, by extracting small volumes of said gas from the coldest part of the coldhead (9), without altering its functioning. This already liquefied gas is added into the liquefaction region (8) of the storage container (2), thereby increasing the average liquefaction rate of the system (1) while maintaining the pressure inside the storage container (2) at a constant value by means of the pressure control mechanism (13), the pressure sensor (14) and/or the PLC (18). When referring to "small volumes" of gas extracted from the coldhead (9), without altering its functioning, these should be interpreted, within the scope of the invention, as volumes which do not alter the refrigeration operations or capacities of the compressor (17) over the coldhead (9) stages (10, 11), maintaining the temperature of the coldest stage (11) of the coldhead (9) stable, preferably at a constant value of substantially 4.2 K (for the case of helium liquefaction applications).

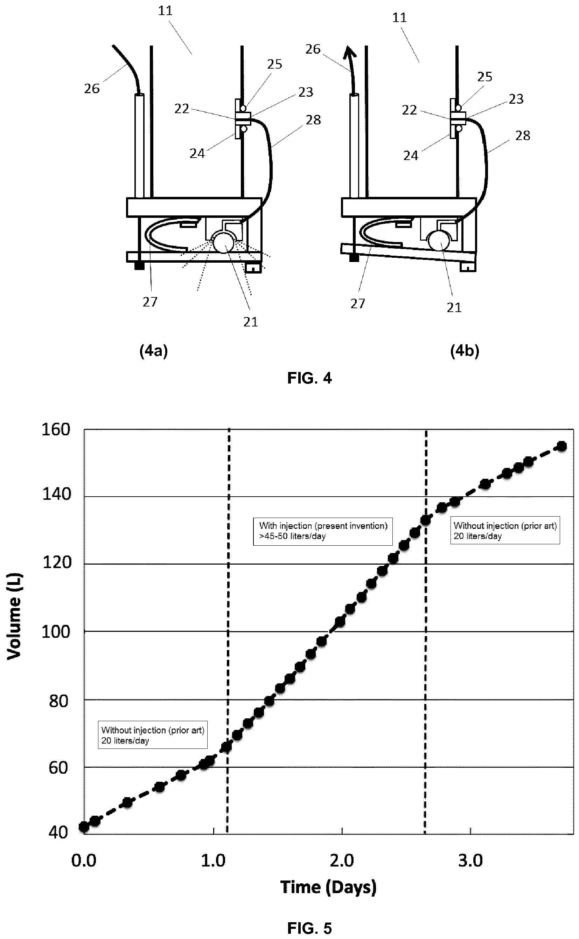

As depicted in Figures 3a-3b, the extraction of gas from the coldhead (9) is preferably carried out by a coldhead gas extraction cryogenic flow valve (21) subsystem, a detail of which is shown in Figure 4, comprising one or more extraction orifices (22) communicating the gas circulation circuit inside the coldhead (9) with the external region of the refrigeration stages (10, 11). Thus, the extraction orifices (22) act as pass-through ports (23), which allow the gas inside the coldhead (9) to flow to the liquefaction region (8) of the storage container (2). More preferably, the extraction orifices (22) have a typical diameter of 0.5-5.0 mm for a small-size cryocooler coldhead (9).

The pass-through extraction orifices (22) can be performed over one or more refrigeration stages (10, 11) of the coldhead (9) by means of screws, rivets or analogous fixing means (24) and they can also comprise insulating seals (25) to prevent undesired gas flow through said fixing means (24).

In order to regulate the amount of gas flowing through the extraction orifices (22), each pass-through port (23) preferably comprises a configurable cryogenic flow valve (21). In different embodiments of the invention, the closed/open configuration of said cryogenic flow valve (21) can be operated by mechanical means, such as traction means (for example, through one or more Bowden cables (26)), compression means (for example, through one or more springs (27)), or the like. The pass-through port (23) and the cryogenic flow valve (21) can optionally be connected through a capillary tube (28).

In a preferred embodiment of the invention, in order to keep the gas pressure at constant values within the compressor (17), the system (1) of the invention comprises also a gas injection source (19) connected with the gas circulation circuit of said compressor (17) through a gas injection valve (20). More preferably, the gas injection source (19) is connected with the return stage (16) of the compressor's circuit. The use of a gas injection source (19) allows keeping the gas amount constant within the compressor (17), thereby stabilizing its internal pressure. The monitoring of the pressure conditions within the coldhead (9) can be performed by the programmable logic controller (18) of the system (1), which receives the necessary data needed to perform the control of the gas injection valve (20). All functions and procedures are controllable remotely or in situ, using programmable devices, such as personal computers or further programmable logic controllers), with specific control software, or connected to digital storage hardware in which such software is stored and remotely accessed.

Although in principle the present invention allows the use of any multi-stage cryocooler coldhead (9), the following description is directed to an embodiment comprising a coldhead with two refrigeration stages (10, 11). Nonetheless, it should be apparent to the person skilled in the art that the application to other types of coldheads (9) (equipped with one, two, or more refrigeration stages (10, 11)) is analogously achievable with equivalent increase in the liquefaction rates.

In order to illustrate the efficiency improvement achieved by the present invention, Figure 5 shows a liquefaction test carried out with a system (1) according to Figure 3b, for the case of a 160-liter storage container (2), equipped with one orifice of 3 mm performed at the second refrigeration stage (11). The gas stored in the container (2) and the gas flowing in the compressor (17) circuit is helium. The figure shows two prior art modes of operation wherein the extraction cryogenic flow valve (21) remains closed, thereby without allowing gas injection from the compressor (17) circuit to the storage container (2). The liquefaction rates obtained are 19-20 liters/day. Between the slow modes, an "injection mode" of operation is also shown where the cryogenic flow valve (21) is opened and pre-cooled helium from inside the coldhead (9) is injected into the liquefaction region (8) of the storage container (2). With this further supply of cooling medium from the gas source (19), liquefaction rate is highly enhanced. The data represented in Figure 5 show a substantial increase of the liquefaction rate which rises from below 20 liters/day (3 liters/day/kW) to above 45 liters/day (7 liters/day/kW), thus, yielding a performance R equivalent to that of industrial liquefactions plants. Compressor (17) internal pressure values are controlled throughout the whole liquefaction process by means of the injection valve (20) at the desired value set on PLC (18). In this mode of operation, constant liquefaction pressure within the storage container is maintained, if needed, by further supplying helium to the storage container (2) from the gas source module (110). The pressure inside the storage container was maintained at 107 kPa, i.e. around atmospheric pressure, during the whole test.

## Claims

1. Cryogen-gas liquefaction system (1) comprising:
- a storage container (2) comprising a liquid storage portion (3) and a neck portion (4) extending therefrom, the liquid storage portion (3) being adapted to contain a liquefied gas bath (7) at the bottom of the storage container (2) and comprising a liquefaction region (8) above said bath (7), wherein the gas to be liquefied exchanges heat with the liquefaction system (1);
- a coldhead (9) arranged at the neck portion (4) comprising one or more refrigeration stages (10, 11) and a refrigeration compressor (17) for distributing compressed gas-phase cryogen inside the coldhead (9), wherein said cryogen gas is supplied to and returned from the coldhead (9) and acts as refrigeration means for lowering the temperature of one or more refrigeration stages (10, 11) of the coldhead (9);
- a pressure control mechanism (13) for controlling the cryogen gas pressure within the liquefaction region (8) of the storage container (2);
**characterized in that** the coldhead (9) further comprises:
- one or more extraction orifices (22) communicating a gas circulation circuit inside the coldhead (9) with the external region of the refrigeration stages (10, 11), acting as pass-through ports (23) which allow the gas inside the coldhead (9) to flow out to the liquefaction region (8) of the storage container (2);
- a gas injection source (19) connected with the gas circulation circuit of said refrigeration compressor (17) through a gas injection valve (20), wherein said gas injection valve (20) is used for controlling the pressure within the coldhead (9).

2. Liquefaction system (1) according to the preceding claim, further comprising a gas source module (110) containing an amount of gas-phase cryogen for its introduction into liquefaction region (8) of the storage container (2).

3. Liquefaction system (1) according to any of the preceding claims, further comprising a level meter (100) for measuring the volume of liquid within the storage container (2).

4. Liquefaction system (1) according to any of the preceding claims, wherein the storage container (2) further comprises a transfer port (12) extending from the liquid storage portion (3) to an external surface of the storage container (2).

5. Liquefaction system (1) according to any of the preceding claims, wherein the pressure control mechanism (13) comprises a pressure sensor (14) for measuring the pressure values within the liquefaction region (8) of the storage container (2).

6. Liquefaction system (1) according to any of the preceding claims, wherein the pressure control mechanism (13) is further connected to a programmable logic controller (18) adapted for dynamically modulating input gas flow and/or pressure within the liquefaction region (8) of the storage container (2).

7. Liquefaction system (1) according to any of the preceding claims, wherein the extraction orifices (22) have a diameter of 0.5-5.0 mm.

8. Liquefaction system (1) according to any of the preceding claims, wherein the extraction orifices (22) are performed over one or more refrigeration stages (10, 11) of the coldhead (9) and attached thereto through fixing means (24) comprised in the pass-through ports (23), optionally in combination with insulating seals (25) to prevent undesired gas flow through said fixing means (24).

9. Liquefaction system (1) according to any of the preceding claims, wherein one or more pass-through ports (23) comprise a configurable cryogenic flow valve (21).

10. Liquefaction system (1) according to the preceding claim, wherein the closed/open configuration of said cryogenic flow valve (21) is operated by traction means (27) and/or compression means (28).

11. Liquefaction system (1) according to any of claims 11-12, wherein the pass-through ports (23) and the cryogenic flow valve (21) are connected through a capillary tube (29).

12. Liquefaction system (1) according to any of the preceding claims, wherein the cryogen gas within the storage container (2) and/or within the compressor (17) is helium.

13. Liquefaction system (1) according to any of the preceding claims, wherein the gas contained in the gas intake module (12) and the gas contained in the gas injection source (19) are both high purity helium gas, recovered from helium-using equipment and purified.

14. Cryogen-gas liquefaction method for use in a system (1) according to any of the preceding claims, comprising the following step:
(i) providing at least:
- a storage container (2) having a liquefaction region (8) and defined by a storage portion (3) and a neck portion (4) extending therefrom;
- a pressure control mechanism (13) for controlling the pressure within the liquefaction region (8) of the storage container (2);
- a cryocooler's coldhead (9) at least partially disposed within the neck portion (4), the coldhead (9) being adapted to condense cryogen contained within the liquefaction region (8) from a gas-phase to a liquid-phase; and comprising a refrigeration compressor (17) for distributing cold compressed gas-phase cryogen inside the coldhead (9), wherein said cryogen is supplied to and returned from the coldhead (9) and acts as refrigeration means for lowering the temperature of one or more refrigeration stages (10, 11) of the coldhead (9);
- a gas injection source (19) containing an amount of gas-phase cryogen;
**characterized in that** the method further comprises the following steps:
(ii) routing the gas inside the coldhead (9) to flow to the liquefaction region (8) of the storage container (2) through one ore more extraction orifices (22), comprised in the cryocooler's coldhead (9) and acting as pass-through ports (23), communicating the gas circulation circuit inside the coldhead (9) with the external region of the refrigeration stages (10, 11);
(iii) connecting the gas injection source (19) with the gas circulation circuit of said compressor (17) through a gas injection valve (20)
for controlling the pressure within the coldhead (9) through a programmable logic controller (18) connected thereto;
(iv) measuring and controlling the vapor pressure within said liquefaction region (8) of the storage container (2) with the pressure control mechanism (13) and the programmable logic controller (18), and the internal pressure within the coldhead (9) with the gas injection valve (20) and programmable logic controller PLC (18);
(v) maintaining the vapor pressure within said liquefaction region (8) of the storage container (2) by means of the pressure controller (13), and maintaining the internal pressure within the coldhead (9) within an operating range by means of the gas injection source (19), and the injection valve (20).

15. Method according to the preceding claim, further comprising the step of injecting gas into the liquefaction region (8) of the storage container (2) with a gas source module (110), in collaboration with the pressure controller (13) for maintaining the vapor pressure during step (v).

## Patentansprüche

1. Verflüssigungssystem (1) zur Verflüssigung von kryogenem Gas umfassend:
- einen Aufbewahrungsbehälter (2) umfassend einen Flüssigkeitsaufbewahrungsteil (3) und einen Halsteil (4), welcher sich davon erstreckt, wobei der Flüssigkeitsaufbewahrungsteil (3) dazu angepasst ist, ein verflüssigtes Gasbad (7) am Boden des Aufbewahrungsbehälters (2) zu enthalten und einen Verflüssigungsbereich (8) über diesem Bad (7) zu umfassen, wobei das zu verflüssigende Gas Wärme mit dem Verflüssigungssystem (1) austauscht;
- einen Kaltkopf (9), welcher am Halsteil (4) angeordnet ist, umfassend eine oder mehrere Kältestufen (10, 11) und einen Kältekompressor (17) zum Verteilen des sich in Gasphase befindenden verdichteten kryogenen Gases innerhalb des Kaltkopfes (9), wobei das genannte kryogene Gas dem Kaltkopf (9) zugeführt wird und davon zurückgeführt wird und als Kältemittel agiert, um die Temperatur einer oder mehrerer der Kältestufen (10, 11) des Kaltkopfes (9) zu verringern;
- einen Drucksteuerungsmechanismus (13) zum Steuern des Druckes des kryogenen Gases innerhalb des Verflüssigungsbereiches (8) des Aufbewahrungsbehälters (2);
**dadurch gekennzeichnet, dass** der Kaltkopf (9) zusätzlich Folgendes umfasst:
- eine oder mehrere Entnahmeöffnungen (22), welche einen Gaszirkulationskreislauf innerhalb des Kaltkopfes (9) mit dem Außenbereich der Kältestufen (10, 11) verbindet, welche als Durchlauflöcher (23) agieren, welche das Strömen des Gases innerhalb des Kaltkopfes (9) aus dem Verflüssigungsbereich (8) des Aufbewahrungsbehälters (2) erlauben;
- eine Gaseinspritzquelle (19), welche über ein Gaseinspritzventil (20) mit dem Gaszirkulationskreislauf des genannten Kältekompressors (17) verbunden ist, wobei das genannte Gaseinspritzventil (20) dazu verwendet wird, den Druck innerhalb des Kaltkopfes (9) zu steuern.

2. Verflüssigungssystem (1) nach dem vorhergehenden Anspruch, zusätzlich umfassend ein Gasquellenmodul (110), welches eine Menge des sich in Gasphase befindenden kryogenen Gas enthält, für dessen Einführung in den Verflüssigungsbereich (8) des Aufbewahrungsbehälters (2).

3. Verflüssigungssystem (1) nach einem der vorhergehenden Ansprüche, zusätzlich umfassend einen Füllstandsmesser (100) zum Messen des Volumens der Flüssigkeit innerhalb des Aufbewahrungsbehälters (2).

4. Verflüssigungssystem (1) nach einem der vorhergehenden Ansprüche, wobei der Aufbewahrungsbehälter (2) zusätzlich ein Übertragungsloch (12) umfasst, welches sich vom Flüssigkeitsaufbewahrungsteil (3) bis zu einer Außenfläche des Aufbewahrungsbehälters (2) erstreckt.

5. Verflüssigungssystem (1) nach einem der vorhergehenden Ansprüche, wobei der Drucksteuerungsmechanismus (13) einen Drucksensor (14) zum Messen der Druckwerte innerhalb des Verflüssigungsbereiches (8) des Aufbewahrungsbehälters (2) umfasst.

6. Verflüssigungssystem (1) nach einem der vorhergehenden Ansprüche, wobei der Drucksteuerungsmechanismus (13) zusätzlich mit einer speicherprogrammierbaren Steuerung (18) verbunden ist, welche dazu angepasst ist, die Gaseingangsströmung und/oder den Druck innerhalb des Verflüssigungsbereiches (8) des Aufbewahrungsbehälters (2) dynamisch zu modulieren.

7. Verflüssigungssystem (1) nach einem der vorhergehenden Ansprüche, wobei die Entnahmeöffnungen (22) einen Durchmesser von 0,5-5,0 mm aufweisen.

8. Verflüssigungssystem (1) nach einem der vorhergehenden Ansprüche, wobei die Entnahmeöffnungen (22) über eine oder mehrere Kältestufen (10, 11) des Kaltkopfes (9) durchgeführt werden und durch in den Durchlauflöchern (23) umfassten Fixiermittel (24) damit gekoppelt werden, wahlweise in Kombination mit Isolierdichtungen (25), um eine ungewünschte Gasströmung durch die genannten Fixiermittel (24) zu verhindern.

9. Verflüssigungssystem (1) nach einem der vorhergehenden Ansprüche, wobei ein oder mehrere Durchlauflöcher (23) ein konfigurierbares kryogenes Durchflussventil (21) umfassen.

10. Verflüssigungssystem (1) nach dem vorhergehenden Anspruch, wobei die geschlossene/offene Konfiguration des genannten kryogenen Durchflussventils (21) mittels Zugmittel (27) und/oder Verdichtungsmittel (28) betrieben wird.

11. Verflüssigungssystem (1) nach einem der Ansprüche 11-12, wobei die Durchlauflöcher (23) und das kryogene Durchflussventil (21) über ein Kapillarrohr (29) verbunden sind.

12. Verflüssigungssystem (1) nach einem der vorhergehenden Ansprüche, wobei das kryogene Gas innerhalb des Aufbewahrungsbehälters (2) und/oder innerhalb des Kompressors (17) Helium ist.

13. Verflüssigungssystem (1) nach einem der vorhergehenden Ansprüche, wobei das im Gaseinlassmodul (12) enthaltene Gas und das in der Gaseinspritzquelle (19) enthaltene Gas beide hochreines Heliumgas sind, welches aus heliumverwendende Apparatur zurückgewonnen und aufgereinigt wird.

14. Verflüssigungsverfahren zur Verflüssigung von kryogenem Gas für dessen Verwendung in einem System (1) nach einem der vorhergehenden Ansprüche, welches die folgenden Schritte umfasst:
(i) das Bereitstellen mindestens:
- eines Aufbewahrungsbehälters (2), welcher einen Verflüssigungsbereich (8) aufweist und durch einen Aufbewahrungsteil (3) und einen Halsteil (4), welcher sich davon erstreckt, definiert wird;
- eines Drucksteuerungsmechanismus (13) zum Steuern des Druckes innerhalb des Verflüssigungsbereiches (8) des Aufbewahrungsbehälters (2);
- eines Kaltkopfs (9) eines Kryokühlers, welcher mindestens teilweise innerhalb des Halsteils (4) angeordnet ist, wobei der Kaltkopf (9) dazu angepasst ist, innerhalb des Verflüssigungsbereiches (8) enthaltenes kryogenes Gas von einer Gasphase zu einer Flüssigphase zu kondensieren; und welcher einen Kältekompressor (17) zum Verteilen des sich in Gasphase befindenden kalten verdichteten kryogenen Gas innerhalb des Kaltkopfes (9) umfasst, wobei das genannte kryogene Gas dem Kaltkopf (9) zugeführt wird und davon zurückgeführt wird und als Kältemittel agiert, um die Temperatur einer oder mehrerer Kältestufen (10, 11) des Kaltkopfes (9) zu verringern;
- einer Gaseinspritzquelle (19), welche eine Menge des sich in Gasphase befindenden kryogenen Gas enthält;
**dadurch gekennzeichnet, dass** das Verfahren zusätzlich die folgenden Schritte umfasst:
(ii) das Leiten des Gases innerhalb des Kaltkopfes (9), um durch eine oder mehrere Entnahmeöffnungen (22) zum Verflüssigungsbereich (8) des Aufbewahrungsbehälters (2) zu strömen, welche im Kaltkopf (9) des Kryokühlers umfasst sind und welche als Durchlauflöcher (23) agieren, welche den Gaszirkulationskreislauf innerhalb des Kaltkopfes (9) mit dem Außenbereich der Kältestufen (10, 11) verbinden;
(iii) das Verbinden der Gaseinspritzquelle (19) mit dem Gaszirkulationskreislauf des genannten Kompressors (17) über ein Gaseinspritzventil (20) zum Steuern des Druckes innerhalb des Kaltkopfes (9) über eine speicherprogrammierbare Steuerung (18), welche damit verbunden ist;
(iv) das Messen und das Steuern des Dampfdruckes innerhalb des genannten Verflüssigungsbereichs (8) des Aufbewahrungsbehälters (2) mit dem Drucksteuerungsmechanismus (13) und der speicherprogrammierbaren Steuerung (18), und des Innendruckes innerhalb des Kaltkopfes (9) mit dem Gaseinspritzventil (20) und der speicherprogrammierbaren Steuerung PLC (18);
(v) das Erhalten des Dampfdruckes innerhalb des genannten Verflüssigungsbereichs (8) des Aufbewahrungsbehälters (2) mittels der Drucksteuerung (13), und das Erhalten des Innendruckes innerhalb des Kaltkopfes (9) innerhalb eines Betriebsbereichs mittels der Gaseinspritzquelle (19) und des Einspritzventils (20).

15. Verfahren nach dem vorhergehenden Anspruch, zusätzlich umfassend den Schritt des Einspritzens von Gas in den Verflüssigungsbereich (8) des Aufbewahrungsbehälters (2) mit einem Gasquellenmodul (110), in Zusammenarbeit mit der Drucksteuerung (13) zum Erhalten des Dampfdruckes während Schritt (v).

## Revendications

1. Système de liquéfaction de gaz cryogénique (1) comprenant :
- un conteneur de stockage (2) comportant une partie de stockage de liquide (3) et une partie de col (4) s'étendant à partir de celle-ci, la partie de stockage de liquide (3) étant adaptée pour contenir un bain de gaz liquéfié (7) au fond du conteneur de stockage (2) et comprenant une région de liquéfaction (8) au-dessus dudit gaz (7), dans laquelle le gaz à liquéfier échange de la chaleur avec le système de liquéfaction (1) ;
- une tête froide (9) disposée sur la partie de col (4) comprenant une ou plusieurs étapes de refroidissement (10, 11) et un compresseur de refroidissement (17) pour distribuer le cryogène en phase gazeuse à l'intérieur de la tête froide (9), dans laquelle ledit gaz cryogénique est fourni à et retourné de la tête froide (9) et agit comme un moyen de refroidissement pour réduire la température d'une ou plusieurs étapes de refroidissement (10, 11) de la tête froide (9) ;
- un mécanisme de commande de pression (13) pour commander la pression du gaz cryogénique au sein de la région de liquéfaction (8) du conteneur de stockage (2) ;
**caractérisé en ce que** la tête froide (9) comprend en outre :
- un ou plusieurs orifices d'extraction (22) communiquant un circuit de circulation de gaz au sein de la tête froide (9) avec la région extérieure des étapes de refroidissement (10, 11), agissant comme des trous traversants (23) permettant au gaz au sein de la tête froide (9) son écoulement dans la région de liquéfaction (8) du conteneur de stockage (2) ;
- une source d'injection de gaz (19) reliée au circuit de circulation de gaz dudit compresseur de refroidissement (17) à travers une soupape d'injection de gaz (20), dans laquelle ladite soupape d'injection de gaz (20) est utilisée pour commander la pression à l'intérieur de la tête froide (9).

2. Système de liquéfaction (1) selon la revendication précédente, comprenant en outre un module de source gazeuse (110) contenant une quantité de cryogène en phase gazeuse pour son introduction dans la région de liquéfaction (8) du conteneur de stockage (2).

3. Système de liquéfaction (1) selon l'une quelconque des revendications précédentes, comprenant en outre un indicateur de niveau (100) pour mesurer le volume de liquide à l'intérieur du conteneur de stockage (2).

4. Système de liquéfaction (1) selon l'une quelconque des revendications précédentes, dans lequel le conteneur de stockage (2) comprend en outre un trou de transfert (12) s'étendant de la partie de stockage de liquide (3) à une surface extérieure du conteneur de stockage (2).

5. Système de liquéfaction (1) selon l'une quelconque des revendications précédentes, dans lequel le mécanisme de commande de pression (13) comprend un capteur de pression (14) pour mesurer les valeurs de pression au sein de la région de liquéfaction (8) du conteneur de stockage (2).

6. Système de liquéfaction (1) selon l'une quelconque des revendications précédentes, dans lequel le mécanisme de commande de pression (13) est relié en outre à un automate programmable (18) adapté pour moduler de manière dynamique l'écoulement de gaz entrant et/ou la pression dans la région de liquéfaction (8) du conteneur de stockage (2).

7. Système de liquéfaction (1) selon l'une quelconque des revendications précédentes, dans lequel les orifices d'extraction (22) ont un diamètre de 0,5-5,0 mm.

8. Système de liquéfaction (1) selon l'une quelconque des revendications précédentes, dans lequel les orifices (22) sont réalisés sur une ou plusieurs étapes de refroidissement (10, 11) de la tête froide (9), et fixés à celles-ci à travers des moyens de fixation (24) compris dans les trous traversants (23), optionnellement en combinaison avec des joints isolants (25) pour éviter l'écoulement de gaz non voulu à travers lesdits moyens de fixation (24).

9. Système de liquéfaction (1) selon l'une quelconque des revendications précédentes, dans lequel un ou plusieurs trous traversants (23) comprennent une soupape d'écoulement cryogénique configurable (21).

10. Système de liquéfaction (1) selon la revendication précédente, dans lequel la configuration fermée/ouverte de ladite soupape d'écoulement cryogénique configurable (21) est commandée par des moyens de traction (27) et/ou des moyens de compression (28).

11. Système de liquéfaction (1) selon l'une quelconque des revendications 11-12, dans lequel les trous traversants (23) et la soupape d'écoulement cryogénique (21) sont reliés à travers un tube capillaire (29).

12. Système de liquéfaction (1) selon l'une quelconque des revendications précédentes, dans lequel le gaz cryogénique à l'intérieur du conteneur de stockage (2) et/ou à l'intérieur du compresseur (17) est de l'hélium.

13. Système de liquéfaction (1) selon l'une quelconque des revendications précédentes, dans lequel le gaz contenu dans le module d'admission de gaz (12) et le gaz contenu dans la source d'injection de gaz (19) sont tous deux du gaz d'hélium de pureté élevée, récupéré de l'équipement d'utilisation d'hélium et purifié.

14. Procédé de liquéfaction cryogénique de gaz à utiliser dans un système (1) selon l'une quelconque des revendications précédentes, comprenant l'étape suivante :
(i) fournissant au moins
- un conteneur de stockage (2) ayant une région de liquéfaction (8) et définie par une partie de stockage (3) et une partie de col (4) s'étendant à partir de celle-ci;
- un mécanisme de commande de pression (13) pour commander la pression au sein de la région de liquéfaction (8) du conteneur de stockage (2) ;
- une tête froide de cryorefroidisseur (9) au moins partiellement disposé dans la portion de col (4), la tête froide (9) étant adaptée pour condenser le cryogène contenu dans la région de liquéfaction (8) d'une phase gazeuse à une phase liquide ; et comprenant un compresseur de refroidissement (17) pour distribuer du cryogène en phase gazeuse comprimé froid à l'intérieur de la tête froide (9), dans laquelle ledit cryogène est fourni à et retourné de la tête froide (9) et agit comme des moyens de refroidissement pour réduire la température d'une ou plusieurs étapes de refroidissement (10, 11) de la tête froide (9) ;
- une source d'injection de gaz (19) contenant une quantité de cryogène en phase gazeuse ;
**caractérisé en ce que** le procédé comprend en outre, les étapes suivantes :
(ii) acheminer le gaz à l'intérieur de la tête froide (9) pour son écoulement dans la région de liquéfaction (8) du conteneur de stockage (2) à travers un ou plusieurs orifices d'extraction (22), compris dans la tête froide de cryorefroidisseur (9) et agissant comme des trous traversants (22) communiquant le circuit de circulation de gaz au sein de la tête froide (9) avec la région extérieure des étapes de refroidissement (10, 11) ;
(iii) relier la source d'injection de gaz (19) avec le circuit de circulation de gaz dudit compresseur (17) à travers une soupape d'injection de gaz (20)
pour commander la pression dans la tête froide (9) à travers un automate programmable (18) relié à celle-ci ;
(iv) mesurer et commander la pression de vapeur au sein de ladite région de liquéfaction (8) du conteneur de stockage (2) avec le mécanisme de commande de pression (13) et l'automate programmable (18), et la pression intérieure au sein de la tête froide (9) avec la soupape d'injection de gaz (20) et l'automate programmable PLC (18).
(v) maintenir la pression de vapeur à l'intérieur de ladite région de liquéfaction (8) du conteneur de stockage (2) par le biais du mécanisme de commande de pression (13), et maintenir la pression intérieure dans la tête froide (9) dans un intervalle de fonctionnement par le biais de la source d'injection de gaz (19), et la soupape d'injection (20).

15. Procédé selon la revendication précédente, comprenant en outre l'étape d'injection de gaz dans la région de liquéfaction (8) du conteneur de stockage (2) avec un module de source de gaz (110), en collaboration avec le mécanisme de commande de pression (13) pour maintenir la pression de vapeur pendant l'étape (v).
